Europäisches Patentamt

European Patent Office

Office européen des brevets

(19)

(11) Numéro de publication: **0 285 827 B1**

## FASCICULE DE BREVET EUROPEEN

(12)

(45) Date de publication de fascicule du brevet:
**29.05.91**

(51) Int. Cl.⁵: **G01L 3/10**

(21) Numéro de dépôt: **88103492.0**

(22) Date de dépôt: **07.03.88**

(54) **Couplemètre à effet vernier.**

(30) Priorité: **17.03.87 FR 8703638**

(43) Date de publication de la demande:
**12.10.88 Bulletin 88/41**

(45) Mention de la délivrance du brevet:
**29.05.91 Bulletin 91/22**

(84) Etats contractants désignés:
**AT CH DE FR GB IT LI SE**

(56) Documents cités:
**US-A- 3 194 065**

**MEASUREMENT TECHNIQUES, vol. 21, no. 7, juillet 1978, pages 930-934, Plenum Publishing Corp., New York, US; A.T. ARTAMONOV et al.: "Converter of the torsion angle of a shaft into digital code"**

**PATENT ABSTRACTS OF JAPAN, vol. 8, no. 1 (P-246)[1438], 6 janvier 1984; & JP-A-58 167 934 (TATEISHI DENKI K.K.) 04-10-1983**

(73) Titulaire: **Société Anonyme dite: CEGELEC
13, rue Antonin Raynaud
F-92309 Levallois-Perret(FR)**

(72) Inventeur: **Pouillange, Jean
7 allée des Sylphides Gressy
F-77410 Claye Souilly(FR)**

(74) Mandataire: **Weinmiller, Jürgen et al
Lennéstrasse 9 Postfach 24
W-8133 Feldafing(DE)**

Rank Xerox (UK) Business Services

## Description

La présente invention concerne un couplemètre à effet vernier.

Selon le brevet US-A-3.194.065, il est connu de mesurer la torsion existant entre deux sections A et B d'un arbre par l'utilisation d'une première et d'une seconde roues dentées au niveau de chaque section, la seconde roue comportant une dent de plus que la première; une des roues comporte un point de référence. En l'absence de torsion sur l'arbre, ce point de référence est aligné avec une dent de la première roue et une dent de la seconde roue. L'application d'un couple de torsion sur cet arbre détruit l'alignement initial au profit d'un nouveau. Des capteurs magnétiques en regard de chaque roue et du point de référence permettent alors, après un traitement électronique, d'obtenir une mesure proportionnelle au couple de torsion.

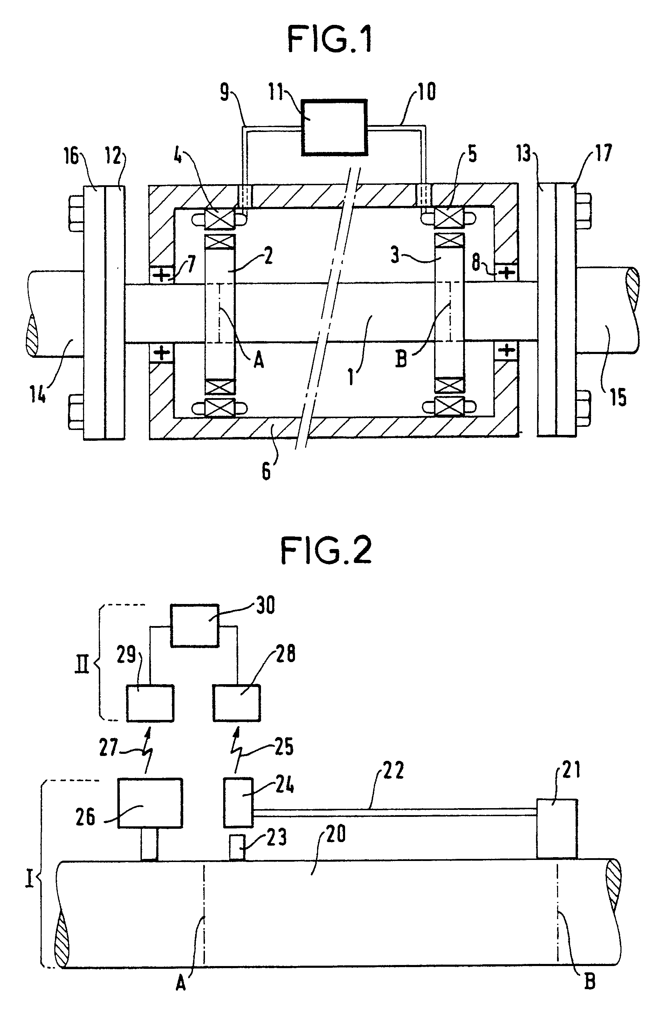

Le dispositif représenté figure 1 est aussi connu. Aux sections A et B sont calés les rotors 2 et 3 de deux alternateurs identiques; les rotors sont associés respectivement à deux induits 4 et 5 fixés à une carcasse commune 6 reliée à l'arbre 1 par des paliers 7 et 8.

Les induits 4 et 5 sont reliés électriquement par des connexions 9 et 10 à un comparateur de phase 11. Le déphasage mesuré est proportionnel à la torsion existant entre les sections A et B.

Des brides 12 et 13 permettent d'insérer l'appareil dans une ligne d'arbres comprenant les arbres 14 et 15 munis de brides 16, 17.

Le couple, exercé par un arbre menant 14 par exemple sur l'arbre mené est proportionnel à la torsion entre les points A et B.

Le couple est donc proportionnel à la mesure du déphasage.

Si, N est la fréquence de rotation de l'arbre et n le nombre de. paires de pôles des alternateurs, la fréquence des courants induits est nN; soit $\phi$ l'angle de torsion entre A et B; le déphasage correspond à n $\phi$ mesuré à la fréquence nN.

En supposant que la limite de précision du phasemètre soit le plus petit intervalle de temps $dt_0$ séparant les ondes émises par les induits 4 et 5, le plus petit angle de torsion détecté est $\phi_0$ lié à $dt_0$ par la relation

$$dt_0 \ < \ \frac{\phi_0}{2 \pi N}$$

On voit que la mesure est d'autant plus difficile que la vitesse est plus grande ; or, cette dernière est imposée par le système à mesurer et ne peut être choisie.

On peut envisager d'augmenter la sensibilité de l'appareil en diminuant la section de l'arbre. Mais cette diminution fragilise la ligne d'arbre en induisant des fréquences critiques basses de torsion.

Un but de la présente invention est de réaliser un couplemètre don la sensibilité, à arbre subissant une torsion donnée, est multipliée par un facteur égal à plusieurs dizaines.

L'invention a pour objet un dispositif pour la mesurè de la torsion entre une première et une seconde sections d'un arbre, pendant la rotation de ce dernier, caractérisé en ce qu'il comprend :

- un premier moyen lié à l'arbre, au niveau de ladite seconde section, pour' élaborer et transmettre au voisinage de ladite première section une information représentatrice de la phase existant au niveau de ladite seconde section,
- au moins un inducteur vernier hétéropolaire dont un élément est lié audit arbre au niveau de ladite première section qui reçoit ladite information au niveau de son autre élément et l'amplifie sous forme du déphasage d'une induction magnétique résultante attachée au repère de l'arbre et tournant avec lui,
- un premier récepteur dipolaire fixe induit par ladite induction magnétique,
- un second récepteur dipolaire fixe induit par une seconde induction magnétique liée au repère de l'arbre, fournie par un second moyen et constituant une référence de phase et un comparateur de phase recevant sur ses entrées les signaux émis par lesdits récepteurs et fournissant un signal de sortie proportionnel à la différence des phases desdits signaux et donc audit angle de torsion.

Avantageusement, ledit premier inducteur vernier hétéropolaire comprend une couronne de 2 p pôles alternés et une denture magnétique comprenant p $\pm$ 1 dents.

Dans un mode particulier de réalisation, ledit second moyen est un alternateur à 2 pôles.

Préférentiellement, ledit second moyen est un inducteur vernier hétéropolaire comprenant une couronne de 2 p pôles en phase avec la précédente denture magnétique comprenant p $\mp$ 1 dents.

2

Dans un mode particulier de réalisation le premier moyen comprend un alternateur à 2 p pôles ayant un inducteur lié à l'arbre au voisinage de ladite deuxième section et un induit alimentant un premier stator à 2 p pôles tournant pratiquement à la vitesse de l'arbre portant l'information stator à 2 p pôles de phase et constituant l'un des éléments dudit inducteur vernier hétéropolaire, l'autre élément étant une roue comprenant p ± 1 dents.

En variante, ledit premier moyen est un élément allongé rigide fixé par une pièce solidaire dudit arbre au voisinage de ladite seconde section et s'étendant entre ladite première et deuxième section de façon à transmettre mécaniquement la phase de la deuxième section au niveau de la première.

Avantageusement, ledit élément allongé est un tube coaxial a l'arbre.

L'invention sera bien comprise à la description ci-après de divers modes de réalisation de l'invention, en référence au dessin annexé dans lequel :

- la figure 1 est une vue schématique d'un couplemètre selon l'art connu,
- la figure 2 est un schéma expliquant les principes d'élaboration et de fonctionnement du couplemètre de l'invention,
- la figure 3 est un schéma d'un couplemètre selon un premier mode de réalisation,
- la figure 4 est un schéma d'un couplemètre selon une première variante de réalisation,
- la figure 5 est un schéma d'un couplemètre selon une deuxième variante,
- la figure 6 est un schéma d'un amortisseur pouvant équiper le couplemètre,
- la figure 7 est un schéma d'un couplemètre selon une troisième variante de réalisation.
- la figure 8 est une variante d'un couplemètre selon une quatrième variante de réalisation.

La figure 1 a été expliquée au cours de l'exposé sur l'art antérieur.

La figure 2 est un schéma expliquant les principes d'élaboration et de fonctionnement du couplemètre de l'invention.

Les éléments réunis par l'accolade I sont liés a l'arbre 20 et tournent avec lui.

Les éléments réunis par l'accolade II sont fixes.

Au niveau de la section B de l'arbre est placé un organe 21 qui fournit une mesure de la phase de B. La mesure est transmise par un organe 22 lié à 21 et reçu dans un inducteur vernier hétéropolaire 23, 24 lié à l'arbre qui amplifie la torsion de l'arbre et la transforme sous la forme d'un déphasage d'une première induction magnétique 25 liée à l'arbre et qui tourne avec lui.

Cette induction est reçue par une récepteur dipolaire 28.

Un organe 26 lié a l'arbre fournit une référence de phase sous forme d'une induction 27 fixe par rapport à l'arbre qui tourne avec l'arbre et qui est reçue par un récepteur dipolaire 29 fixe.

Un comparateur de phase 30 relié aux sorties des récepteurs 28 et 29 fournit une information proportionnelle au déphasage donc à l'angle de torsion.

L'utilisation d'un inducteur vernier hétéropolaire permet une très grande précision de mesure; supposons que l'inducteur vernier 23 comprenne une couronne de 2 p pôles magnétiques coopérant avec une denture de p + 1 dents et qu'un déphasage $\phi$ en B soit communiqué par l'organe 22 à l'un des éléments de l'inducteur vernier hétéropolaire.

On sait que, par suite de l'effet vernier les 2 p pôles magnétiques se transforment en une paire de pôles magnétiques ou macropôles déphasés de p $\phi$ .

L'organe 26 de référence de phase peut être un alternateur dipolaire.

Dans ce cas, en supposant encore que la limite de précision du phasemètre soit le plus petit intervalle de temps $dt_0$ séparant les ondes 25 et 27, le plus petit angle de torsion $\phi$ 1 détecté est lié à $dt_0$ par la relation

$$dt_0 \ < \ \frac{p\,\phi_1}{2\pi N} \qquad\qquad (2)$$

En se référant à la relation (1) précédente, on voit que $\phi$ 1 est lié à $\phi_0$ par la relation

$$\phi_1 = \frac{\phi_0}{p} \qquad\qquad (3)$$

La relation (3) signifie que la précision de la mesure est augmentée d'un facteur multiplicatif égal à p.

EP 0 285 827 B1

Le nombre p peut être aisément atteindre 50 ou plus, ce qui montre que la précision de l'appareil peut être nettement accrue par rapport à celle des appareils de l'art antérieur, la fréquence de lecture ne dépassant pas celle de rotation de la ligne d'arbre.

Si l'organe de référence 26 est un autre inducteur vernier hétéropolaire, comprenant 2 p pôles alternés coopérant avec une roue à p-1 dents, auquel est communiqué le déphasage existant entre A et B, ce vernier se traduit par deux macropôles déphasés de -pφ.

La sensibilité de la mesure est alors encore doublée par rapport au cas précédent.

La sensibilité de la mesure peut alors dépasser de 2 ordres de grandeur celle de l'appareil de l'art antérieur.

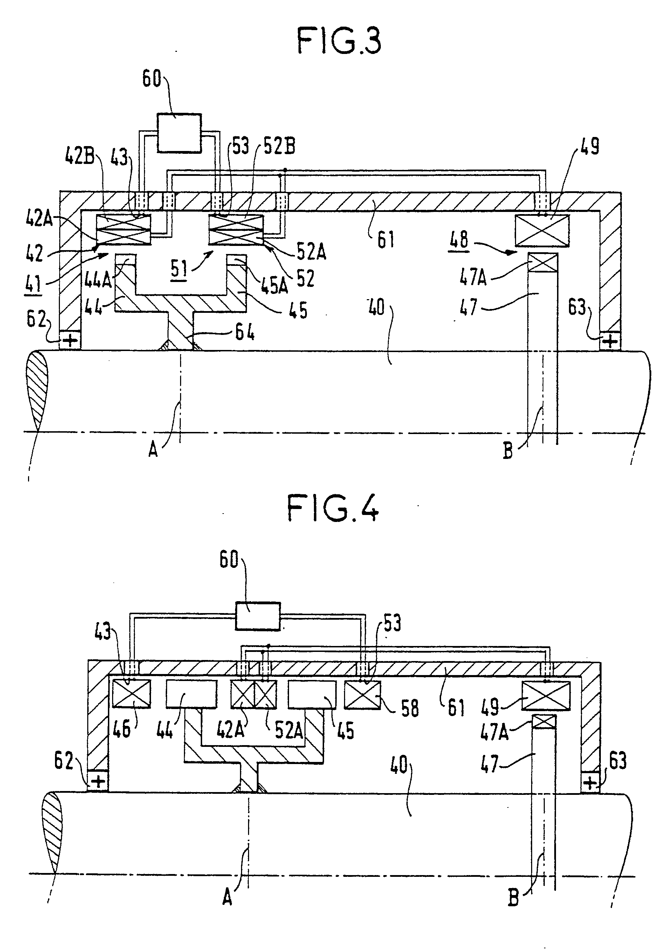

Un premier mode de réalisation de l'invention est décrit maintenant, en référence à la figure 3.

Dans ce mode de réalisation, le dispositif comprend deux inducteurs vernier hétéropolaires et la phase de la section B leur est transmise par voie électrique.

Au point B de l'arbre 40 est fixé un inducteur 47 d'un alternateur 48 à 2p pôles 47A comprenant un induit statorique 49 de même polarité. Le courant de l'induit 49 alimente deux stators 42 et 52 disposés au voisinage de la section 4. Ces stators sont munis chacun d'un bobinage (resp. 42A, 52A) a 2p pôles, donc de même polarité que l'induit 49. Il en résulte que les pôles de l'induit de l'alternateur 48 sont reproduits au droit des alésages des stators 42 et 52.

Les bobinages 42A et 52A se comportent donc chacun comme 2p pôles liés a l'arbre, ayant la phase du point B. Ils constituent la première partie des inducteurs vernier hétéropolaires annoncés.

Les stators 42 et 52 sont également munis de bobinages dipolaires 42B, 52B (récepteurs) dont les sorties respectives 43, 53 sont reliées à un comparateur de phase 60.

Les stators 42, 52 et 49 sont disposés dans une carcasse magnétique commune 61 liée à l'arbre par des paliers 62 et 63.

Les inducteurs vernier hétéropolaires comprennent, outre les pôles 42A, 52A, des roues 41 et 51 comprenant respectivement une couronne dentée 44 à p-1 dents et 45 à p + 1 dents. Avantageusement, les couronnes sont reliées à l'arbre par un disque commun 64 soudé à l'arbre.

Le fonctionnement du couplemètre qui vient d'être décrit est identique à celui dont le principe a été donne en référence à la figure 2.

La figure 4 représente une variante de réalisation dans laquelle les bobinages à 2p pôles et les bobinages dipolaires sont disposés de part et d'autre des rotors dentés.

Les éléments communs aux figures 3 et 4 ont reçu les mêmes numéros de référence. Les bobinages dipolaires (récepteurs) sont cette fois références 46 et 58. La circulation des flux est cette fois parallèle à l'axe AB.

La proximté des dents et des récepteurs assure un meilleur lissage des tensions de sorties envoyées au comparateur. Le lissage peut encore être amélioré par une judicieuse inclinaison des dentures statoriques.

Les deux modes de réalisation donnés en référence aux figures 3 et 4 conviennent aux couplemètres destinés à la mesure des couples des lignes d'arbres de diamètre important tournant à vitesse relativement faible (inférieure à 3000 tours/minute).

On utilisera de préférence la technique des induits à encoches contenant les conducteurs.

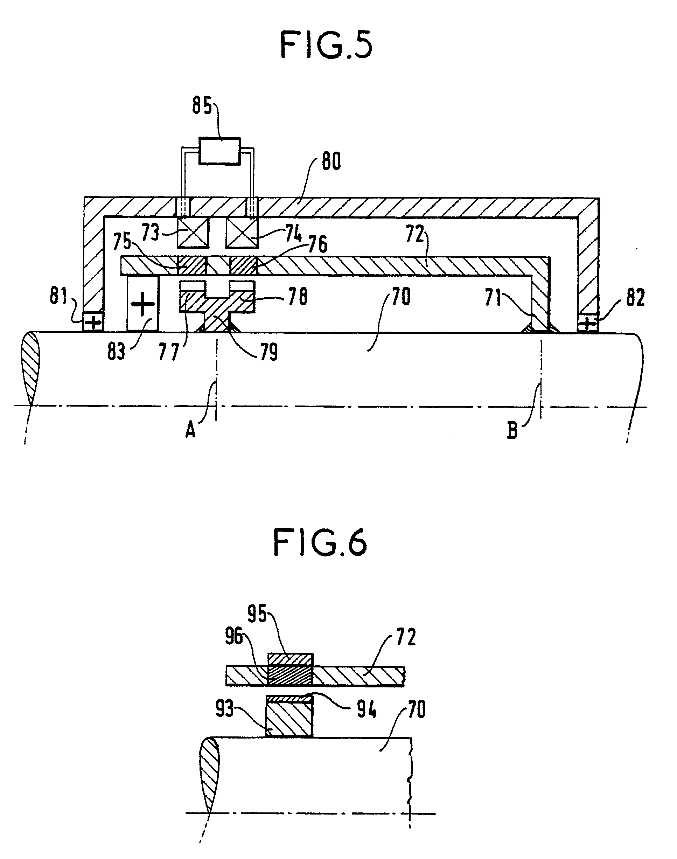

Pour les appareils de plus faible diamètre, (inférieur à 70-80 mm) l'encochage n'est plus possible. On utilise alors une variante de réalisation décrite ci-après en référence à la figure 5.

Au droit de la section B de l'arbre, référencé 70, est soudé un disque 71 solidaire d'un tube 72 s'étendant coaxialement à l'arbre jusqu'au delà de la section A.

Ce tube est rigide et transmet sans torsion de B en A la phase de torsion existant dans la section B.

Au voisinage du point A, le tube 72 est entouré par deux stators à bobinages dipolaires 73 et 74. Le tube porte, enchassés dans son épaisseur, deux couronnes de 2p aimants à aimantation alternée 75 et 76. Au droit des aimants 75 et 76 sont disposées respectivement deux couronnes de dents 77 et 78, liées à l'arbre 70 par un disque commun 79.

La couronne 77 possède p + 1 dents, la couronne 78 en possède p-1.

Les bobinages 73 et 74 sont fixés à une carcasse 80 liée à l'arbre par des paliers 81 et 82.

Un palier 83 (facultatif) sert de guidage au tube 72. Les bobinages dipolaires sont reliés électriquement à un comparateur de phase 85.

Les inducteurs vernier hétéropolaires sont donc ici constitués l'un par des aimants 75 et la couronne dentée 77, les autres par les aimants 76 et la couronne dentée 78.

Le fonctionnement du couplemètre est tout à fait analogue à celui des couplemètres à double effet Vernier décrits précédemment.

On peut (figure 6) avantageusement doter l'arbre d'une culasse magnétique 93 recouverte d'une

4

couche 94 d'un bon conducteur de l'électricité; le tube 72 est entouré par une culasse massive 95 et doté d'une couronne de petits aimants alternés 96. Cet ensemble constitue un amortisseur de vibrations de torsion à courants de Foucault.

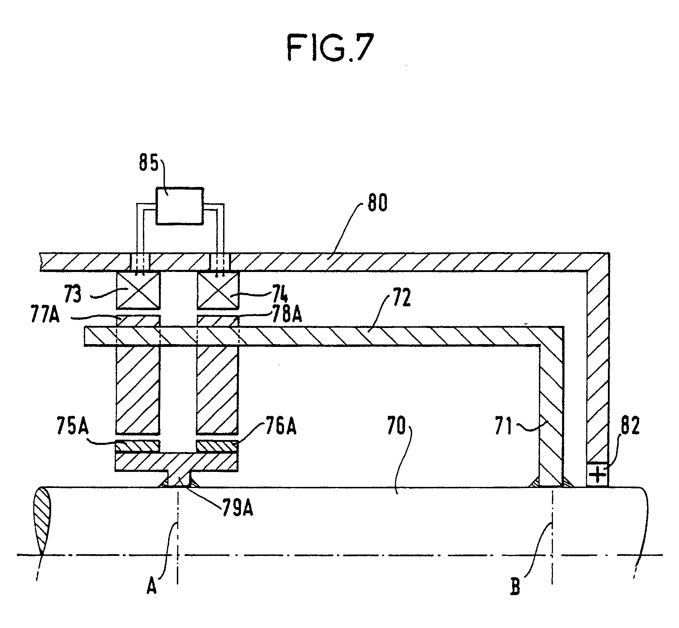

Dans la variante de réalisation représentée dans la figure 7, les éléments communs aux figures 5 et 7 ont reçu le même numéro de référence.

Les couronnes d'aimants 75A, 76A sont cette fois liées à l'arbre par un support 79A. Les groupes de p-1 et p + 1 dents, 77A et 78A utilisent le tube 72 comme jante et le traversent.

Les flux sont, comme précédemment, communiqués aux bobinages statoriques 73 et 74.

Dans tous les modes de réalisation décrits, le rôle des sections A et B peut être interverti.

L'interaction des phases de A et B au moyen d'un inducteur hétéropolaire vernier peut être réalisée à un niveau quelconque de l'arbre AB.

Les éléments constitutifs du couplemètre peuvent être montés directement sur l'arbre à surveiller ; en variante, le couplemètre peut être monté sur un tronçon d'arbre muni à ses extrémités de brides pour son insertion dans une ligne d'arbre à surveiller.

Bien que les exemples décrits en références aux figures 5 à 7 mentionnent l'emploi d'un tube, on comprendra que ce dernier peut être remplacé par un élément allongé non torsible, par exemple un bras ou une pluralité de bras reliés entre eux ou un tube ajouré.

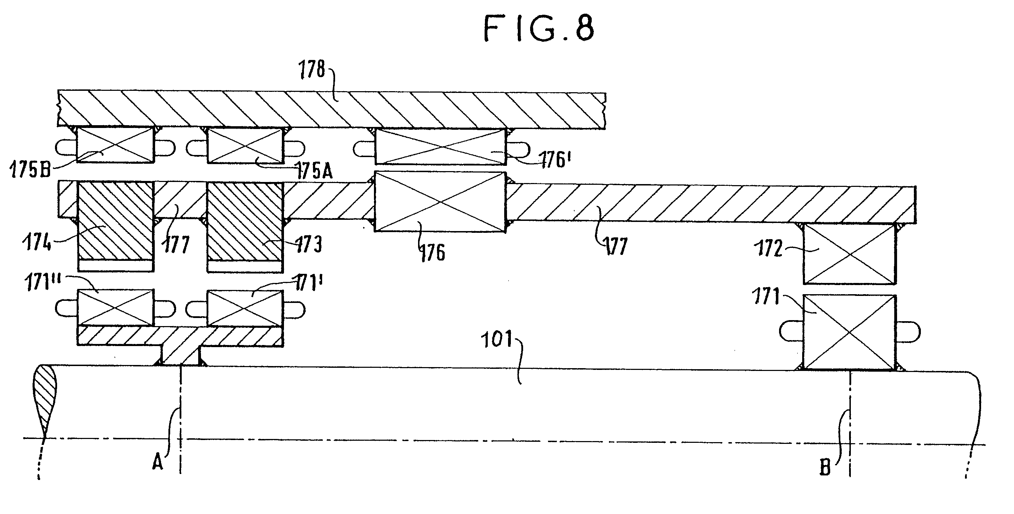

La figure 8 représente schématiquement un couplemètre destiné à la mesure de torsion des arbres peu sensibles à la torsion.

Un induit 171 à N paires de pôles est lié à l'arbre 101 en B. Il fait face à un inducteur 172 tournant de polarité M à aimants par exemple. Les courants induits créent M paires de pôles tournant à la vitesse de l'inducteur.

Ces courants sont transmis par une liaison non représentée, à deux induits 171' et 171" homologues, liés à l'arbre en A face à deux dentures magnétiques 173 et 174 de M + 1 et de N - 1 dents respectivement, tournant exactement à la même vitesse que l'inducteur.

Ob obtient ainsi deux ensembles vernier d'amplification + N, tournant à ladite vitesse. Une torsion de B par rapport à A se traduit par un décalage des pôles en A d'un angle a et un déphasage relatif des macropôles tournant des deux systèmes de 2 Na.

Ces macropôles induisent deux tensions dans des récepteurs fixes 175A, 175B dont le déphasage 2 Na est mesuré.

L'inducteur et les deux dentures qui tournent à la même vitesse sont entraînés si possible par un seul moteur 176, 176' à l'axe 177 extrêmement peu torsible. La référence 178 désigne la carcasse statorique.

Si deux moteurs synchrones séparés sont nécessaires, ils sont alimentés en série et un bobinage auxiliaire permet d'asservir le second en position au même angle que le premier.

Le dispositif décrit ci-dessus permet la mesure des torsions d'un arbre aux très faibles vitesses de rotation de celui-ci, mais également à l'arrêt. Il permet donc l'étalonnage de l'arbre.

## Revendications

1. Dispositif pour la mesure de la torsion entre une première (A) et une seconde(B) section d'un arbre, pendant la rotation de ce dernier, caractérisé en ce qu'il comprend:
   - un premier moyen (21) lié à l'arbre, au niveau de ladite seconde section (B), pour élaborer et transmettre au voisinage de ladite première section (A) une information représentative de la phase existant au niveau de ladite seconde section (B),
   - un inducteur vernier hétéropolaire, dont un élément (23) est lié audit arbre au niveau de ladite première section (A), qui reçoit ladite information au niveau de son autre élément (24) et l'amplifie sous forme d'un déphasage d'une première induction magnétique (25) résultante attachée au repère de l'arbre et tournant avec lui,
   - un premier récepteur dipolaire fixe (28) induit par ladite induction magnétique,
   - un second récepteur dipolaire fixe (29) induit par une seconde induction magnétique (27) liée au repère de l'arbre au niveau de ladite première section (A), fournie par un second moyen (26) et constituant une référence de phase, et un comparateur de phase (30), recevant sur ses entrées les signaux émis par lesdits récepteurs (28, 29) et fournissant un signal de sortie proportionnel à la différence des phases desdits signaux et donc audit angle de torsion.

2. Dispositif selon la revendication 1, caractérisé en ce que ledit premier inducteur vernier hétéropolaire comprend une couronne (23) de 2 p pôles alternés et une denture magnétique (24) comprenant p ± 1 dents.

3. Dispositif selon l'une des revendications 1 ou 2, caractérisé en ce que ledit second moyen (26) est un alternateur à deux pôles.

4. Dispositif selon l'une des revendications 1 ou 2, caractérisé en ce que ledit second moyen (26) est un inducteur vernier hétéropolaire comprenant une couronne de 2 p pôles en phase avec la précédente et une denture magnétique comprenant p ± 1 dents.

5. Dispositif selon la revendication 3, caractérisé en ce que le premier moyen comprend un alternateur (48) à 2 p pôles ayant un inducteur (47) lié à l'arbre au voisinage de ladite seconde section, et un induit (49) alimentant un premier stator (42) à 2 p pôles tournant pratiquement à la vitesse de l'arbre portant l'information de phase et constituant l'un des éléments dudit inducteur vernier hétéropolaire, l'autre élément étant une roue comprenant p ± 1 dents.

6. Dispositif selon la revendication 4, caractérisé en ce que ledit premier moyen comprend un alternateur (48) à 2 p pôles ayant un inducteur (47) lié à l'arbre au voisinage de ladite seconde section et un induit (49) alimentant un premier stator (42) à 2 pôles tournant pratiquement à la vitesse de l'arbre porteur de l'information de phase et constituant l'un des éléments du premier inducteur vernier hétéropolaire, ledit induit alimentant un second stator (52) à 2 p pôles tournant sensiblement à la vitesse de l'arbre porteur de l'information de phase et constituant l'un des éléments du second inducteur vernier hétéropolaire, les autres éléments étant respectivement une roue magnétique (44) à p ± 1 dents et une roue magnétique (45) à p ∓ 1 dents.

7. Dispositif selon la revendication 6, caractérisé en ce que les roues magnétiques (44, 45) sont disposées respectivement entre un stator (42, 52) et un récepteur (46, 58).

8. Dispositif selon l'une des revendications 1 à 4, caractérisé en ce que ledit premier moyen est un élément allongé rigide (72) fixé par une pièce (71) solidaire dudit arbre au voisinage de ladite seconde section (B) et s'étendant entre ladite première (A) et ladite seconde section (B) de façon à transmettre mécaniquement sans torsion la phase de la seconde section (B) au niveau de la première (A).

9. Dispositif pour la mesure de la torsion entre une première (A) et une seconde (B) section d'un arbre, aux très faibles vitesses de rotation de ce dernier et même à l'arrêt, caractérisé en ce qu'il comprend:
   - un premier induit à N paires de pôles (171) calé au droit de la deuxième section (B) et faisant face à un inducteur tournant de polarité M à aimants,
   - deux ensembles vernier constitués par un second et un troisième induit (171'; 171"), calés au droit de la première section (A) et parcourus par le courant induit dans le premier induit (171),
   - lesdits second et troisième induits (171'; 171") faisant face à des dentures magnétiques (173, 174) ayant respectivement M + 1 dents et N-1 dents,
   - un premier (175A) et un second (175B) récepteurs fixes recevant les inductions élaborées par les deux ensembles vernier (171', 171")
   - et un moyen pour mesurer le déphasage desdites inductions qui est proportionnel à ladite torsion.

**Claims**

1. A device for measuring the torsion existing between first and second sections (A, B) of a shaft, while the shaft is rotating, characterized in that it comprises:
   - first means (21) fixed to the shaft at said second section (B) for generating information representative of the phase at said second section (B) and transmitting said information to the vicinity of said first section (A),
   - a heteropolar vernier inductor of which one element (23) is fixed to said shaft at said first section (A) and which receives said information at its other element (24) and amplifies it in the form of a phase shift of a first resulting magnetic induction (25) attached to a reference on the shaft and rotating therewith,

- a first stationary bi-polar receiver (28) induced by said magnetic induction,
- a second stationary bi-polar receiver (29) induced by a second magnetic induction (27) related to the reference at said first section (A) and provided by a second means (26) and constituting a phase reference, and
- a phase comparator (30) receiving the signals provided by said receivers (28, 29) and supplying an output signal proportional to the phase difference between said signals, and thus to said angle of torsion.

2. A device according to claim 1, characterized in that said first heteropolar vernier inductor comprises a ring (23) of 2p alternating poles together with magnetic toothing (24) comprising p ± 1 teeth.

3. A device according to claim 1 or 2, characterized in that said second means (26) is a 2-pole alternator.

4. A device according to claim 1 or 2, characterized in that said second means (26) is a heteropolar vernier inductor comprising a ring of 2p poles in phase with the preceding one and a magnetic toothing comprising p ± 1 teeth.

5. A device according to claim 3, characterized in that the first means comprises a 2p-pole alternator (48) having an inductor (47) fixed to the shaft in the vicinity of said second section, and an armature (49) feeding a first 2p-pole stator (42) rotating at practically the same speed as the shaft, conveying phase information and constituting one of the elements of said heteropolar vernier inductor, the other element being a wheel having p $\pm$ 1 teeth.

6. A device according to claim 4, characterized in that said first means comprises a 2p-pole alternator (48) having an inductor (47) connected to the shaft in the vicinity of said second section, and an armature (49) feeding a first 2-pole stator (42) rotating at practically the same speed as the shaft carrying phase information, and constituting one of the elements of the first heteropolar vernier inductor, said armature feeding a second 2p-pole stator (52) rotating at practically the same speed as the shaft carrying the phase information, and constituting one of the elements of the second heteropolar vernier inductor, the other elements being respectively a magnetic wheel (44) having p ± 1 teeth and a magnetic wheel (45) having p ∓ 1 teeth.

7. A device according to claim 6, characterized in that the magnetic wheels (44, 45) are disposed respectively between a stator (42, 52) and a receiver (48, 58).

8. A device according to any one of claims 1 to 4, characterised in that said first means is an elongate rigid element (72) fixed to a part (71) integral with said shaft in the vicinity of said second section (B), and extending between first (A) and second sections (B) in such a manner as to mechanically transmit without twist the phase of the second section (B) to the first section (A).

9. A device for measuring the torsion between a first (A) and a second section (B) of a shaft, running at very low speeds, and even when at rest, characterized in that it comprises:
   - a first armature having N pairs of poles (171) wedged at the first section (A) and facing a rotary N-pole permanent magnetic inductor,
   - two vernier assemblies consisting of second and third armatures (171' and 171") wedged at the second section (B) and having the current induced in the first armature (171) passing therethrough,
   - said second and third armatures (171', 171") facing magnetic toothings (173, 174) which have respectively N + 1 teeth and N - 1 teeth,
   - a first (175A) and a second stationary receiver (175B) receiving the inductions generated by the two vernier sets (171', 171") and
   - means for measuring the phase difference between said inductions, which difference is proportional to said torsion.

## Ansprüche

1. Einrichtung zur Messung der Torsion zwischen einer ersten (A) und einer zweiten Querschnittsebene (B) einer drehenden Welle, dadurch gekennzeichnet, daß sie folgende Bestandteile aufweist:
- ein erstes mit der Welle in Höhe des zweiten Querschnitts (B) verbundenes Mittel (21) zur Gewinnung und zur Übermittlung einer die Phase in Höhe des zweiten Querschnitts (B) wiedergebenden Information in den Bereich des ersten Querschnitts (B),
- einen heteropolaren Vernierinduktor, von dem ein Element (23) mit der Welle in Höhe des ersten Querschnitts (A) verbunden ist und der die Information über sein anderes Element (24) empfängt und in Form einer Phasenverschiebung einer ersten resultierenden magnetischen Induktion (25) verstärkt, die an die Bezugsmarke der Welle gebunden ist und mit dieser umläuft,
- einen ersten ortsfesten Dipol-Aufnehmer (28), der von der genannten magnetischen Induktion induktiv beeinflußt wird,
- einen zweiten ortsfesten Dipol-Aufnehmer (29), der von einer zweiten magnetischen Induktion (27), die der Bezugsmarke der Welle im Bereich des ersten Querschnitts (A) zugeordnet ist, induktiv beeinflußt wird und die durch ein zweites einen Phasenbezug bildendes Mittel (26) geliefert wird, und einen Phasenkomparator (30), der an seinen Eingängen die von den Aufnehmern (28, 29) abgegebenen Signale empfängt und ein Ausgangssignal liefert, das der Differenz zwischen den Phasen der genannten Signale und somit dem Torsionswinkel proportional ist.

2. Einrichtung nach Anspruch 1, dadurch gekennzeichnet, daß der erste heteropolare Vernierinduktor einen Kranz (23) mit 2p alternierenden Polen und eine magnetischen Zahnung mit p ± 1 Zähnen aufweist.

3. Einrichtung nach Anspruch 1 oder 2, dadurch gekennzeichnet, daß das zweite Mittel (26) ein zweipoliger Wechselstromgenerator ist.

4. Einrichtung nach Anspruch 1 oder 2, dadurch gekennzeichnet, daß das zweite Mittel (26) ein heteropolarer Vernierinduktor mit einem mit dem vorhergehenden Kranz phasengleichen Kranz mit 2p Polen, und mit einer magnetischen Zahnung mit p ± 1 Zähnen ist.

5. Einrichtung nach Anspruch 3, dadurch gekennzeichnet, daß das erste Mittel einen Wechselstromgenerator (48) mit 2p Polen aufweist, der einen mit der Welle in Höhe des zweiten Querschnitts verbundenen Induktor (47) besitzt, und daß es eine Ankerwicklung (49) aufweist, die einen ersten Stator (42) mit 2p Polen speist und praktisch mit der Geschwindigkeit der die Phaseninformation tragenden Welle umläuft und das eine der Elemente des heteropolaren Vernierinduktors bildet, während das andere Element ein Rad mit p ± 1 Zähnen ist.

6. Einrichtung nach Anspruch 4, dadurch gekennzeichnet, daß das erste Mittel einen Wechselstromgenerator (48) mit 2p Polen aufweist, der einen mit der Welle in Höhe des zweiten Querschnitts verbundenen Induktor (47) besitzt, und daß es eine Ankerwicklung (49) aufweist, die einen ersten Stator (52) mit 2p Polen speist und praktisch mit der Geschwindigkeit der die Phaseninformation tragenden Welle umläuft und das eine der Elemente des zweiten heteropolaren Vernierinduktors bildet, wahrend die anderen Elemente ein magnetisches Rad (44) mit p±1 Zähnen bzw. ein magnetisches Rad (45) mit p∓1 Zähnen ist.

7. Einrichtung nach Anspruch 6, dadurch gekennzeichnet, daß die magnetischen Räder (44, 45) zwischen einem Stator (42, 52) und einem Aufnehmer (46, 58) angeordnet sind.

8. Einrichtung nach den Ansprüchen 1 bis 4, dadurch gekennzeichnet, daß das erste Mittel ein starres, längliches Element (72) ist, das durch ein fest mit der Welle in Höhe des zweiten Querschnitts (B) verbundenes Teil (71) befestigt ist und sich zwischen dem ersten (A) und dem zweiten Querschnitt (B) erstreckt, derart, daß es ohne Verdrehung mechanisch die Phase des zweiten Querschnitts (B) in den Bereich des ersten Querschnitts (A) überträgt.

9. Einrichtung zur Messung der Torsion zwischen einem ersten (A) und einem zweiten Querschnitt (B) einer Welle bei sehr niedrigen Umdrehungsgeschwindigkeiten derselben und sogar bei Stillstand, dadurch gekennzeichnet, daß sie folgende Bestandteile aufweist:
- eine erste Ankerwicklung mit N Polpaaren (171), die in Höhe des zweiten Querschnitts (B) festgekeilt istd und einem umlaufenden Induktor der Polarität N mit Magneten gegenübersteht,
- zwei Verniereinheiten, bestehend aus einer zweiten und einer dritten Ankerwicklung (171', 171"), die in Höhe des ersten Querschnitts (A) festgekeilt sind und von dem in der ersten Ankerwicklung (171) induzierten Strom durchflossen werden,

- wobei die zweiten und dritten Ankerwicklungen (171', 171") magnetischen Zahnungen (173, 174) gegenüberstehen, die N + 1 bzw. N-1 Zähne besitzen,
- einen ersten (175A) und einen zweiten festen Aufnehmer (175B), welche die von den beiden Verniereinheiten (171', 171") erzeugten Induktionen aufnehmen, und
- ein Mittel zum Messen der Phasenverschiebung zwischen den genannten Induktionen, die der Torsion proportional ist.

# FIG.1

# FIG.2

# FIG.3

# FIG.4

# FIG.5

# FIG.6

# FIG.7

FIG.8